# FASCICULE DE BREVET EUROPEEN

(11) **EP 3 395 624 B1**
(45) Date de publication et mention de la délivrance du brevet: **20.11.2024**
(21) Numéro de dépôt: 18167175.1
(22) Date de dépôt: 13.04.2018
(51) Int. Cl.: B60S 1/08, B60S 1/52, B08B 3/02

(54) **DISPOSITIF DE NETTOYAGE TÉLESCOPIQUE**
TELESKOPREINIGUNGSVORRICHTUNG
TELESCOPIC CLEANING DEVICE

(30) Priorité: 25.04.2017 FR 1753573
(43) Date de publication de la demande: 31.10.2018
(73) Titulaire: Valeo Systèmes d'Essuyage, 78322 Le Mesnil Saint Denis (FR)
(72) Inventeur: VIEILLE, Jordan, 63500 ISSOIRE (FR); PICOT, Philippe, 63500 ISSOIRE (FR); Rollet, Sébastien, 63500 ISSOIRE (FR); KOLANOWSKI, Grégory, 63500 ISSOIRE (FR); GRASSO, Giuseppe, 63500 ISSOIRE (FR); BOUSSET, Xavier, 63500 ISSOIRE (FR); BAUDOUIN, Maxime, 63500 ISSOIRE (FR)
(74) Mandataire: Valeo Visibility

(56) Documents cités:
- EP-A1- 3 006 278
- DE-A1- 10 048 014
- DE-C1- 4 237 856
- FR-A1- 2 783 225

## Description

La présente invention se rapporte au domaine des systèmes de détection optique destinés à équiper un véhicule automobile. Elle concerne plus particulièrement les dispositifs de nettoyage destinés à projeter au moins un fluide de nettoyage ou de séchage vers une surface optique à nettoyer d'un capteur optique d'un tel système de détection.

On appelle système de détection optique tout système comportant des capteurs optiques tels que des caméras, des capteurs laser ou autres capteurs basés sur l'émission et/ou la détection de la lumière dans le spectre visible ou invisible pour l'Homme, en particulier l'infrarouge.

De tels systèmes de détection ont pour fonction de recueillir des informations sur l'environnement du véhicule automobile, afin de fournir au conducteur une aide à la conduite et/ou à la manoeuvre de ce véhicule. Pour que cette aide soit efficace, les données fournies par le système de détection optique doivent être de la meilleure qualité possible, et il est donc indispensable de disposer de capteurs propres pour réaliser ces acquisitions de données. Pour ce faire, un dispositif de nettoyage peut être commandé pour projeter, sur une surface optique d'un capteur du système de détection optique (par exemple la lentille d'une caméra de prise de vues), un ou plusieurs fluides de nettoyage et/ou de séchage avant que soit réalisée la détection (par exemple la prise de vue). De tels dispositifs de nettoyage peuvent comporter au moins un corps d'acheminement de fluide formé d'une partie mobile, constituée d'un piston logé dans un cylindre de vérin, et apte à se déplacer d'une position de repos rétractée à une position de nettoyage déployée. Dans un tel mode de réalisation, le corps d'acheminement est habituellement raccordé, à son extrémité amont, et par l'intermédiaire d'un conduit d'alimentation flexible, à un réservoir de stockage du ou des fluides de nettoyage et/ou de séchage, et raccordé à son extrémité aval, opposée à son extrémité amont, à un dispositif de distribution et de projection du ou des fluides de nettoyage et/ou de séchage.

Il a été observé qu'il pouvait être souhaitable de procéder à un chauffage du fluide de nettoyage avant que celui-ci soit projeté sur la surface optique à nettoyer.

D'autres exemples de systèmes de détection sont décrits dans les documents DE4237856, DE10048014 et FR2783225.

L'invention s'inscrit dans ce contexte et vise à proposer une amélioration des solutions existantes relatives aux dispositifs de nettoyage par projection d'un fluide de nettoyage chauffé sur une surface optique à nettoyer. L'invention a ainsi pour but de proposer un dispositif de nettoyage destiné à projeter au moins un fluide vers une surface à nettoyer d'un véhicule automobile, tel qu'une surface optique d'un capteur optique d'un système de détection optique qui, par un agencement compact et télescopique, permet de ne pas entraver le fonctionnement du capteur optique et qui, par l'agencement d'un dispositif chauffant, permet d'augmenter le pouvoir nettoyant du fluide projeté, de sorte que l'efficacité du nettoyage et du dégivrage de la surface optique à nettoyer sont améliorés.

L'invention n est définie par la revendication 1 et concerne un dispositif de nettoyage télescopique destiné à projeter au moins un fluide de nettoyage et/ou de séchage vers une surface vitrée à nettoyer d'un véhicule automobile, telle qu'une surface optique d'un capteur optique d'un système de détection optique pour véhicule, le dispositif de nettoyage comprenant au moins un élément de distribution de fluide, rendu mobile, le long d'un axe d'allongement et en bout d'un piston mobile entre une première position rétractée et une deuxième position déployée de nettoyage et/ou de séchage.

L'invention prévoit également que- le canal de distribution de fluide s'étend principalement perpendiculairement à l'axe d'allongement du piston mobile. ;
Selon l'invention, l'élément de distribution de fluide comporte une rampe de distribution à l'intérieur duquel s'étend un canal de distribution de fluide et la rampe de distribution est équipée d'un dispositif chauffant intégré au moins en partie dans la rampe de distribution pour chauffer le fluide passant dans ledit canal de distribution.

Par surface vitrée, ou surface optique, on comprend une surface transparente aux rayons électromagnétiques émis par un capteur optique, notamment dans le cadre d'une détection de distance d'un véhicule ou d'un objet au voisinage du véhicule équipé du dispositif de nettoyage selon l'invention.

Selon différentes caractéristiques de l'invention, prises seules ou en combinaison, on peut prévoir que :
- le dispositif chauffant comporte un fil résistif ;
- le dispositif chauffant est agencé de manière à s'étendre au moins en partie dans le canal de distribution ;
- le dispositif chauffant présente une partie interne logée dans le corps creux défini par la rampe de distribution et une partie externe qui s'étend à l'extérieur de la rampe de distribution, le dispositif chauffant étant configuré pour traverser un orifice de passage ménagé dans une paroi de la rampe de distribution ; le dispositif chauffant présente, dans sa partie interne, la forme d'une boucle agencée dans le canal de distribution de sorte que la partie externe est formée par deux extrémités jointives du dispositif chauffant ;

- le dispositif chauffant peut notamment présenter une partie interne sous forme d'une boucle agencée dans le canal de distribution, la partie externe étant de la sorte formée par deux extrémités jointives ;
- l'orifice de passage est rempli d'un matériau de remplissage, notamment de type résine ou gel, pour assurer l'étanchéité entre la rampe de distribution et le dispositif chauffant ;
- la longueur de la partie interne du dispositif chauffant est fonction de la longueur du canal de distribution de fluide et la longueur de la partie externe du dispositif chauffant est fonction de la course de déplacement de la rampe de distribution entre la position extrême rétractée et la position extrême déployée ; en d'autres termes, la partie interne du dispositif chauffant présente une longueur correspondant sensiblement à la longueur du canal de distribution, la partie interne étant tendue à l'intérieur de la rampe de distribution, et la partie externe du dispositif chauffant présente une longueur suffisante pour ne pas bloquer le déplacement de la rampe de distribution lorsque celle-ci passe en position extrême déployée, la partie externe du dispositif chauffant étant détendue lorsque la rampe de distribution est en position extrême rétractée ;
- la partie externe du dispositif chauffant s'étend à distance du piston mobile ;
- la partie externe du dispositif chauffant est ménagée dans un fourreau ;
- le dispositif chauffant s'étend le long du canal de distribution de fluide, en étant maintenu par l'intermédiaire d'une pluralité de plots de maintien ;
- la rampe de distribution s'étend transversalement de part et d'autre de l'axe d'allongement le long duquel coulisse le piston mobile ;
- la rampe de distribution s'étend sensiblement symétriquement de part et d'autre de l'axe d'allongement le long duquel coulisse le piston mobile ;
- le canal de distribution communique avec des moyens d'alimentation en fluide de nettoyage/séchage et comporte une pluralité d'orifices de distribution de ce fluide pour l'éjection de celui-ci vers la surface optique à nettoyer ;
- le canal de distribution de fluide forme un circuit fermé avec deux parties principales reliées entre elles à leurs extrémités et dont l'une communique avec l'alimentation en fluide de nettoyage/séchage et l'autre comporte les orifices de distribution ; et la partie interne du dispositif chauffant est agencée pour s'étendre tout le long de ce circuit fermé ;
- la rampe de distribution comporte une embase formant une première partie prolongeant le piston mobile et un couvercle venant recouvrir l'embase de manière à définir le canal de distribution de fluide ;
- l'embase et le couvercle sont assemblés l'un à l'autre par soudage, par collage, par clipsage ou par tout moyen permettant une étanchéité de circulation du fluide à l'intérieur du canal dans le volume de la rampe de distribution ;
- le dispositif chauffant est plaqué contre une face interne de l'embase par l'intermédiaire de ces plots de maintien ;
- les plots de maintien du dispositif chauffant sont agencés contre la face interne de l'embase de manière à faire adopter au dispositif chauffant une trajectoire de forme sensiblement similaire à celle du canal de distribution de fluide.

Selon une série de caractéristiques de l'invention, propres à l'ensemble télescopique, et qui peuvent donc être combinées aux caractéristiques relatives à l'élément de distribution et à l'agencement du dispositif chauffant dans la rampe formant cet élément de distribution, on peut prévoir que :
- le piston mobile est configuré pour coulisser à l'intérieur d'un corps creux d'acheminement du liquide de nettoyage et/ou de séchage, le piston mobile étant configurée pour être traversé par le liquide de nettoyage et/ou de séchage au moins dans la position extrême déployée de la rampe de distribution ;
- le corps creux d'acheminement de fluide de nettoyage est une pièce de révolution autour d'un axe d'allongement, fermée à une extrémité amont par une bride d'entrée et logeant le piston mobile configuré pour coulisser dans le corps creux d'acheminement, parallèlement à l'axe d'allongement, le piston mobile, creusé par un conduit intérieur de distribution, étant porteur à une extrémité aval de l'élément de distribution de fluide ;
- le corps creux d'acheminement loge une tige qui s'étend en saillie de la bride d'entrée le long de l'axe d'allongement et autour de laquelle est apte à coulisser le piston mobile, le piston mobile et/ou la tige étant configurés pour permettre entre eux, en fonction de la position du piston mobile par rapport à la tige, l'écoulement du fluide depuis la bride d'entrée jusqu'à l'élément de distribution, et un élément chauffant est ménagé sur la tige ;
- l'élément chauffant, par exemple sous forme d'un fil chauffant, est ménagé le long de la tige, de manière à être disposé entre la tige et le piston mobile, dans le canal de circulation de fluide de nettoyage, le fluide de nettoyage s'écoulant entre la tige et le piston mobile étant amené à s'écouler au contact de l'élément chauffant ;
   - l'élément chauffant, par exemple sous forme d'un fil chauffant, s'étend à l'intérieur d'un tube conducteur de chaleur, le long de l'axe d'allongement, le tube conducteur de chaleur définissant une enveloppe extérieure de la tige, le fluide de nettoyage s'écoulant entre la tige et le piston mobile étant amené à s'écouler contre la paroi du tube conducteur de chaleur ;
   - l'élément chauffant s'étend à l'intérieur de la tige depuis la bride d'entrée ;
   - l'élément chauffant s'étend jusqu'à l'extrémité libre de la tige opposée à la bride d'entrée ;
   - l'élément chauffant forme une boucle au voisinage de l'extrémité libre de la tige opposée à la bride d'entrée ; le fil chauffant peut notamment être agencé de manière à faire un aller/retour en forme de U ;
   - la tige comporte, à son extrémité libre opposée à la bride d'entrée, des moyens de maintien de l'élément chauffant.

Selon une série de caractéristiques de l'invention, on peut prévoir que :
- des canaux de passages sont ménagés dans la paroi intérieure du conduit de distribution du piston mobile, de manière à pouvoir piloter le débit d'écoulement du fluide de nettoyage dans le dispositif de nettoyage, depuis son entrée dans la chambre d'admission jusqu'à sa projection par l'élément de distribution ; ces canaux de passage peuvent être agencés parallèlement entre eux et autour de l'axe d'allongement du dispositif de nettoyage télescopique ;
- chaque canal de passage présente une dimension axiale (hauteur d'un canal dans la direction de l'axe longitudinal d'allongement du piston mobile) et/ou radiale (profondeur du canal dans l'épaisseur de la paroi intérieure du piston mobile) identique et/ou distincte de celle des canaux voisins ; on comprend que lorsque le piston mobile est en position extrême rétractée, chaque canal de passage est recouvert intégralement et de façon étanche par la tige de manière à bloquer l'écoulement de fluide de nettoyage tandis que, lorsque le piston mobile adopte une position intermédiaire jusqu'à atteindre sa position extrême déployé, au moins une extrémité d'un canal de passage est dégagée de manière à permettre l'écoulement du fluide de nettoyage depuis la chambre d'admission jusqu'à l'élément de distribution ;
- un embout d'admission de fluide formé en saillie de la bride d'entrée et excentré par rapport à l'axe d'allongement du dispositif de nettoyage sur lequel est centré le corps creux d'acheminement de fluide dans lequel il débouche ;
- des moyens élastiques de rappel en position, de préférence un ressort de compression, logés dans le corps creux d'acheminement pour porter contre le piston mobile, à l'opposé de la chambre d'admission, et pour tendre à rappeler en position extrême rétractée le piston mobile.

Un deuxième objet de l'invention concerne un système de détection optique destiné à équiper un véhicule automobile et comportant au moins un capteur optique muni d'une surface optique, le système de détection étant particulier en ce qu'il comporte un dispositif de nettoyage télescopique tel que décrit précédemment, destiné à projeter au moins un fluide de nettoyage et/ou de séchage vers de la surface optique.

Le dispositif de nettoyage comporte au moins une rampe de distribution de fluide équipée d'un dispositif chauffant, et il peut comporter en outre un élément chauffant additionnel intégré dans l'ensemble télescopique sur lequel la rampe de distribution est montée.

Avantageusement, le système de détection optique peut comporter, en amont du dispositif de nettoyage chauffant selon l'invention, un conduit chauffant d'acheminement de fluide à l'intérieur duquel s'étend un fil résistif relié à un connecteur.

Un troisième objet de l'invention concerne un véhicule automobile équipé d'au moins un système de détection optique équipé d'un dispositif de nettoyage tel que précédemment décrit, destiné à projeter au moins un fluide de nettoyage et/ou de séchage vers une surface vitrée à nettoyer d'un véhicule automobile, tel qu'une surface optique d'un capteur optique.

D'autres caractéristiques et avantages de l'invention apparaîtront plus clairement à la lecture de la description détaillée des modes de réalisation de l'invention, donnée ci-après à titre d'exemples illustratifs et non limitatifs et s'appuyant sur les figures annexées, dans lesquelles on a illustré le dispositif de nettoyage télescopique selon un aspect de l'invention, destiné à projeter au moins un fluide de nettoyage et/ou de séchage vers une surface vitrée à nettoyer d'un véhicule automobile, et parmi lesquelles :

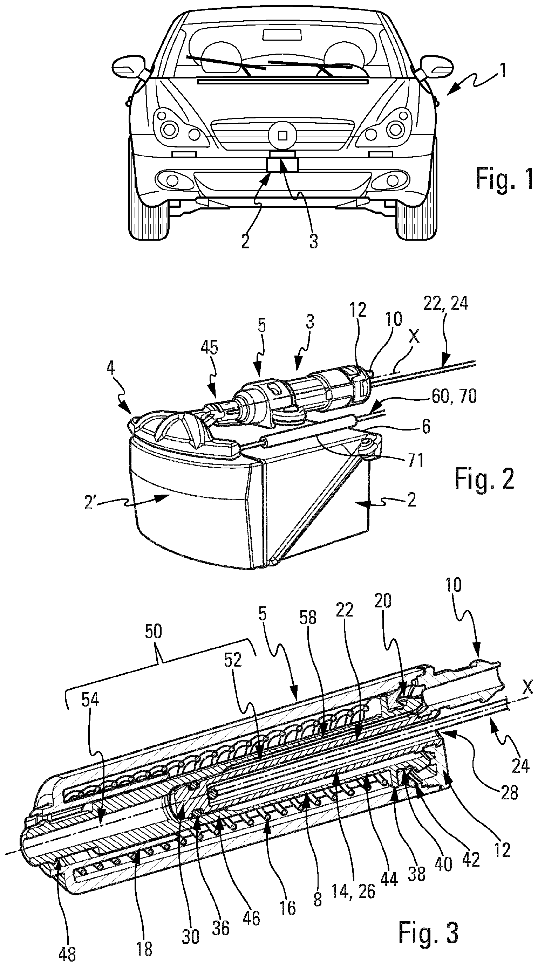

- la figure 1 est une vue de face d'un véhicule où est installé un système de détection comportant au moins un dispositif de nettoyage selon l'invention,
- la figure 2 est une vue schématique en perspective d'un mode de réalisation du dispositif de nettoyage et du capteur optique associé dans un agencement d'un système de détection selon l'invention, le dispositif de nettoyage comportant une rampe de distribution en bout d'un corps creux d'acheminement,
- la figure 3 est une vue en coupe d'une partie du dispositif de nettoyage selon l'invention présentant la coopération des éléments constitutifs dudit dispositif, plus particulièrement la coopération entre une tige, comportant un dispositif chauffant, et un piston mobile, représenté ici en position extrême rétractée ou position de repos, à l'intérieur du corps creux d'acheminement illustré sur la figure 2,

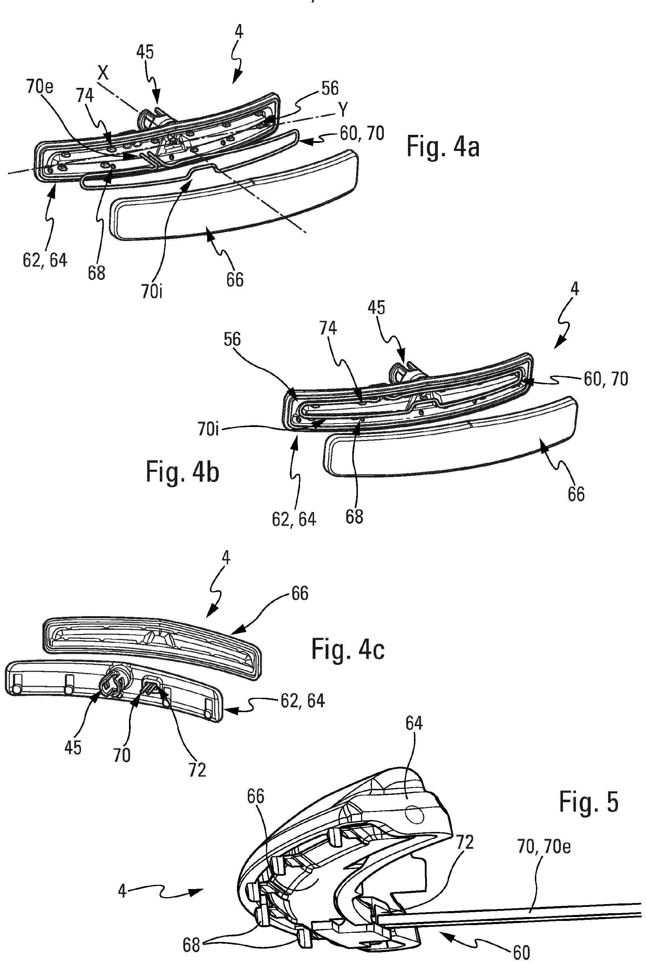

- les figures 4a, 4b, 4c sont des vues éclatées, respectivement avant (4a, 4b) et arrière (4c), de l'élément de distribution du dispositif de nettoyage selon l'invention sous forme d'une rampe de distribution, dans laquelle est en particulier intégré un dispositif chauffant, selon un premier mode de réalisation,
- et la figure 5 est une vue en perspective d'une rampe de distribution, dans laquelle est en particulier intégré un dispositif chauffant, selon un deuxième mode de réalisation.

Il est tout d'abord à noter que si les figures exposent l'invention de manière détaillée pour sa mise en oeuvre, elles peuvent bien entendu servir à mieux définir l'invention le cas échéant. De même, il est rappelé que, pour l'ensemble des figures, les mêmes éléments sont désignés par les mêmes repères. On comprendra également que les modes de réalisation de l'invention illustrés par les figures sont données à titre d'exemple non limitatif. Par conséquent, d'autres configurations du dispositif de nettoyage selon l'invention peuvent être réalisées, notamment par variations de l'agencement et du dimensionnement des éléments constitutifs dudit dispositif de nettoyage selon l'invention, en particulier, de la tige, du piston et/ou de l'élément de distribution de fluide.

Il est également rappelé que, dans la description qui suit, les dénominations "amont" et "aval" se réfèrent à la direction d'écoulement du fluide dans le dispositif de nettoyage selon l'invention. Ainsi, la dénomination "amont" se réfère au côté du dispositif selon l'invention par lequel ce fluide est admis en son sein, et la dénomination "aval" se réfère au côté du dispositif selon l'invention par lequel le fluide est distribué à l'extérieur de celui-ci, vers une surface d'un capteur optique d'un ensemble de détection optique d'un véhicule automobile.

La figure 1 illustre un véhicule 1 comportant selon l'invention un ensemble de détection faisant partie d'un système d'aide à la conduite, cet ensemble de détection comportant ici en face avant du véhicule 1 un capteur optique 2 et un dispositif de nettoyage 3 selon l'invention. L'ensemble de détection est ici agencé sur la face avant du véhicule, notamment au niveau de la calandre.

La figure 2 illustre le dispositif de nettoyage 3, agencé au voisinage du capteur optique 2 et de sa surface optique 2' et qui comporte notamment un élément de distribution 4 de fluide, ici constitué d'une rampe de distribution, fixé, par une portion d'extrémité 45, à une extrémité aval d'un corps creux 5 d'acheminement de fluide qui présente une forme allongée selon un axe d'allongement X, le corps creux 5 d'acheminement de fluide étant fixé sur un boîtier 6 du capteur optique 2.

L'élément de distribution 4 est porté à l'extrémité d'un piston mobile 8 (visible sur la figure 3) configuré pour coulisser à l'intérieur du corps creux 5 d'acheminement de fluide entre une position déployée et une position rétractée, de sorte que l'élément de distribution 4 peut prendre en conséquence une position de nettoyage dans laquelle il se retrouve déployé en avant de la surface optique 2' à nettoyer, les buses de distribution de l'élément de distribution étant orientées de manière à ce que le fluide de nettoyage soit projeté sur la surface optique, et une position escamotée, visible sur la figure 2, dans laquelle l'élément de distribution est protégé et ne gêne pas la détection via le capteur optique 2.

Selon l'invention, l'élément de distribution 4 comporte une rampe de distribution équipée d'un dispositif chauffant 60 intégré au moins en partie dans le corps creux formé par la rampe de distribution. Notamment, le dispositif chauffant comporte un fil résistif chauffant 70 logé au moins en partie dans un canal de distribution 56 de fluide ménagé dans le volume de la rampe. L'élément chauffant présente dans l'exemple illustré la forme d'un fil résistif chauffant, sans que cela soit limitatif de l'invention dès lors que l'élément chauffant est logé, au moins partiellement, à l'intérieur du canal de distribution ménagé dans le volume de la rampe.

Avant de décrire plus en détails l'élément de distribution 4 selon différents modes de réalisation, on se réfère à la figure 3 qui représente l'intérieur du corps creux 5 d'acheminement de fluide pour illustrer la coopération entre des éléments constitutifs dudit dispositif de nettoyage 3, télescopique du fait du déplacement du piston mobile 8. Il convient de noter que la rampe de distribution formant l'élément de distribution 4 pourrait être monté sur un ensemble télescopique distinct de ce qui va être décrit et illustré, et que le fluide de nettoyage pourrait être amené dans la rampe de distribution par d'autres moyens que ceux qui vont être décrits ci-après à titre d'exemple, dès lors que la rampe comporte un dispositif chauffant embarqué.

Dans l'exemple illustré, le dispositif de nettoyage télescopique 3 est constitué pour l'essentiel, de l'amont vers l'aval suivant un axe longitudinal X d'allongement du dispositif de nettoyage 3, d'un embout d'admission de fluide 10, d'une bride d'entrée 12, d'une tige 14 solidaire de la bride d'entrée 12, du piston mobile 8, d'un moyen élastique de rappel en position 16 et de l'élément de distribution 4 visible sur la figure 2. Chacun de ces composants est positionné par rapport au corps creux 5 d'acheminement de fluide, de révolution autour de l'axe d'allongement X.

Le corps creux 5 d'acheminement de fluide est fermé à une extrémité amont par la bride d'entrée 12 et il est configuré pour loger le piston mobile 8, guidé en translation le long de l'axe d'allongement notamment au niveau d'un manchon de guidage 18 ménagé dans le corps creux 5 d'acheminement à l'extrémité aval.

L'embout d'admission de fluide 10 est formé en saillie de la bride d'entrée 12, et il s'étend à l'opposé du corps creux 5 d'acheminement de fluide, en étant ici excentré par rapport à l'axe longitudinal X du corps creux 5 d'acheminement de fluide. L'embout d'admission 10 présente un alésage longitudinal traversant et débouchant à l'intérieur du corps creux 5 d'acheminement de fluide dans une chambre d'admission 20 délimitée au moins en partie par la bride d'entrée 12, une paroi périphérique du corps creux d'acheminement de fluide et par le piston mobile 8.

La bride d'entrée 12 est configurée pour fermer l'extrémité amont du corps creux 5 d'acheminement de fluide. Un organe d'étanchéité peut être prévu au niveau de cette fermeture. La bride d'entrée est configurée pour supporter la tige 14 sur sa face interne, tournée vers l'intérieur du corps creux 5 d'acheminement de fluide.

La tige 14 s'étend en saillie de la bride d'entrée 12, à l'intérieur du corps creux 5 d'acheminement de fluide, de manière d'une part à former un organe de guidage en translation du piston mobile 8, qui est configuré pour coulisser autour de cette tige 14, et d'autre part à former une partie du dispositif d'entraînement en translation du piston mobile sous l'effet de la pression du fluide de nettoyage injecté dans le corps creux d'acheminement de fluide via l'embout d'admission de fluide 10. On saura décrire ci-après le fonctionnement du dispositif de nettoyage télescopique selon l'invention.

La tige 14 s'étend, le long de l'axe d'allongement X, en saillie de la bride d'entrée 12 et elle comporte ici un élément chauffant 22, ayant pour fonction de réchauffer le fluide de nettoyage avant son arrivée dans la rampe de distribution, en complément de l'action de chauffage du fluide réalisée par le dispositif chauffant embarqué dans cette rampe.

L'élément chauffant 22 comporte, dans l'exemple illustré sur la figure 3, un organe chauffant, ici un fil chauffant 24, et un tube cylindrique creux conducteur de chaleur 26 s'étendant le long de l'axe d'allongement X, le fil chauffant 24 étant logé à l'intérieur du tube cylindrique creux conducteur de chaleur 26. A titre de variante ici non illustrée, l'élément chauffant peut consister en un fil chauffant enroulé autour de la tige de manière à se trouver directement au contact du passage du liquide de nettoyage. La encore, l'organe chauffant 22 présente dans l'exemple illustré la forme d'un fil chauffant, sans que cela soit limitatif de l'invention dès lors que l'organe chauffant est logé, au moins partiellement, à l'intérieur du tube conducteur de chaleur.

Dans l'exemple illustré, le tube conducteur de chaleur 26 définit l'enveloppe extérieure de la tige 14, et le fluide amené à s'écouler entre la tige et le piston mobile, lorsque la pression de fluide de nettoyage présent dans le corps creux d'acheminement est suffisante pour déplacer le piston mobile à l'encontre de la force de rappel du moyen élastique 16, s'écoule directement contre la paroi du tube conducteur de chaleur, de telle sorte que la chaleur dégagée au niveau de la paroi du tube sous l'effet de l'allumage du fil chauffant 24 est transmise directement au fluide de nettoyage traversant le piston mobile en direction de l'élément de distribution 4.

La tige 14 présente de la sorte une forme définie par le profil du tube conducteur de chaleur, à savoir ici une forme de tube creux cylindrique, à section annulaire, dont la face périphérique extérieure est lisse. La tige est ainsi creuse sur toute sa dimension le long de l'axe d'allongement, de sorte qu'un orifice de passage 28 est ménagé à la jonction du tube conducteur de chaleur 26 et de la bride d'entrée 12 pour laisser accès à l'intérieur de la tige 14.

A l'extrémité libre de la tige, c'est-à-dire l'extrémité opposée à la bride d'entrée, la tige est fermée par un embout 30, rapporté contre l'extrémité aval du tube conducteur de chaleur 26. L'embout 30 comporte des moyens de maintien du fil chauffant 24, afin notamment d'assurer la tension du fil et sa position sur toute la dimension d'allongement de la tige 14. On saura décrire ci-après d'autres caractéristiques propres à l'agencement du fil chauffant à l'intérieur de la tige 14 en décrivant plus en détail le montage de l'ensemble.

L'embout 30 comporte une gorge périphérique apte à accueillir un joint torique d'étanchéité 36 de manière à permettre le coulissement étanche du piston 8 le long de ladite tige 14 qu'il entoure. Le joint torique d'étanchéité 36 est configuré pour prendre appui contre une face interne du piston mobile 8.

L'embout est ici réalisé en matière plastique, étant entendu que selon un aspect de l'invention, le tube conducteur de chaleur 26 est composé d'une matière métallique conductrice de chaleur, de préférence du laiton ou de l'aluminium, afin de transmettre la chaleur dégagée par le fil chauffant 24 vers le fluide de nettoyage amené à passer le long de la face périphérique extérieure de la tige.

Le piston mobile 8 comporte, au voisinage de son extrémité amont tournée vers la bride d'entrée 12, une couronne 38 sur la paroi extérieure de laquelle est agencée une gorge périphérique 40, apte à accueillir un élément d'étanchéité 42 de manière à permettre le coulissement étanche du piston mobile 8 dans le corps creux 5 d'acheminement de fluide, et à s'assurer ainsi de la circulation du fluide vers l'intérieur du piston mobile 8, entre celui-ci et la tige 14. L'élément d'étanchéité 42 est de préférence un joint à lèvres, apte à limiter les frottements du piston mobile 8 dans le corps creux 5.

Le piston mobile 8 comporte des portions sensiblement cylindriques que l'on peut définir, de l'amont vers l'aval, comme étant une partie d'admission 44 portant la couronne 38, une partie centrale 46 apte à coulisser au sein du manchon de guidage 18 creux ménagé à l'extrémité aval du corps creux 5 d'acheminement de fluide et une partie terminale de distribution 48, de diamètre moindre.

Le piston mobile 8 est creusé par un conduit intérieur de distribution 50 du fluide de nettoyage comportant, à son extrémité amont, une portion supérieure 52 élargie qui permet le coulissement du piston mobile 8 autour de la tige 14 et, à son extrémité aval, une portion inférieure 54 de diamètre moindre, qui permet de mettre sous pression le fluide de nettoyage amené à circuler à l'intérieur du piston mobile 8 en vue de sa projection en sortie de l'élément de distribution 4 sur le capteur optique 2.

Le piston mobile 8 est connecté, par la partie terminale 48 de distribution de fluide, à l'élément de distribution 4 de fluide de nettoyage constitué, selon un mode de réalisation préféré de l'invention illustré sur la figure 2, d'une rampe de distribution 4 fixée à une extrémité aval du corps creux d'acheminement 5 de fluide, c'est-à-dire à la partie terminale 48 de distribution de fluide du piston mobile 8, par une portion d'extrémité 45 (visible sur la figure 2 par exemple). Plus particulièrement, la partie terminale 48 de distribution de fluide du piston mobile 8 est agencée pour que la portion inférieure 54 du conduit de distribution 50 ménagé dans le piston 8 puisse communiquer avec le canal de distribution 56 de fluide ménagé dans l'élément de distribution 4, en particulier de la rampe de distribution, tel que visible sur les figures 4a à 4c.

Le piston mobile 8 est monté dans le corps creux 5 d'acheminement de fluide autour de la tige 14 qui s'étend sensiblement coaxialement au piston mobile 8, de manière à ce qu'au moins l'embout 30 formant l'extrémité libre de la tige 14 s'étende à l'intérieur du conduit intérieur de distribution 50 du piston mobile 8. Le piston mobile 8 coulisse dans le corps creux d'acheminement 5 entre une position extrême rétractée, ou position de repos et une position extrême déployée, ou position de nettoyage, sous l'effet de pression du fluide de nettoyage arrivant dans la chambre d'admission 20 via l'embout d'admission 10. Le moyen élastique de rappel en position 16, de préférence un ressort hélicoïdal de compression, est agencé dans le corps creux d'acheminement 5 entre la paroi périphérique du corps creux et le piston mobile 8, de manière à prendre appui à une extrémité sur le fond du corps creux 5, autour du manchon de guidage 18 et à l'extrémité opposée sur une face de la couronne 38. Le moyen élastique de rappel en position 16 est apte à se déformer sous l'effet de la pression du fluide de manière à autoriser le déplacement longitudinal du piston mobile 8. On comprend ainsi qu'en phase de chargement du fluide dans le dispositif de nettoyage 3, le piston mobile 8 se déplace à l'opposé de la chambre d'admission 20 puis effectue un trajet inverse de rappel à l'issue de la phase de nettoyage par éjection du fluide.

Le piston mobile 8 et/ou la tige 14, ici le piston mobile 8, sont configurés pour comporter des canaux de passage 58 qui autorisent l'écoulement de fluide de nettoyage à l'intérieur du piston mobile depuis la chambre d'admission 20, dont le volume variable est défini en fonction de la position du piston mobile 8 relativement à la bride d'entrée 12. Les canaux de passage 58 sont formés chacun par une rainure ménagée ici dans la paroi intérieure du piston mobile 8 délimitant le conduit intérieur de distribution 50. On comprend que lors du coulissement relatif du piston mobile 8 par rapport à la tige 14, le fluide est bloqué dans les canaux de passage tant que le joint torique d'étanchéité 36 ménagé dans l'embout 30 de la tige 14 se trouve en aval de l'extrémité de ces canaux de passage (tel que visible sur la figure 3), et que le fluide peut s'échapper des canaux de passage vers l'élément de distribution 4 lorsqu'au moins une extrémité des canaux de passage se retrouve au-delà du joint torique d'étanchéité 36.

Les canaux de passage 58 peuvent présenter des dimensions axiales et/ou des radiales différentes de manière à pouvoir piloter l'arrivée progressive de fluide dans l'élément de distribution 4. Par l'expression « dimension axiale », on entend la hauteur d'un canal de passage 58, dans la direction de l'axe longitudinal X d'allongement du piston mobile 8 tandis que par « dimension radiale », on entend parler de profondeur dudit canal de passage 58, dans l'épaisseur de la paroi intérieure du piston mobile 8 dans laquelle les canaux de passage 58 peuvent être ménagés.

Le tube conducteur de chaleur 26 entoure le fil chauffant 24 et ils s'étendent le long de l'axe d'allongement X dans une position centrée par rapport à la bride d'entrée 12.

Le fil chauffant 24 s'étend à l'intérieur du tube conducteur de chaleur 26 depuis la bride d'entrée 12 jusqu'à l'embout 30 disposé à l'extrémité du tube conducteur de chaleur 26.

Dans l'exemple illustré, le fil chauffant 24 présente au niveau de l'embout 30, et donc au voisinage de l'extrémité aval de la tige, une forme de boucle de manière à présenter deux brins s'étendant côte à côte, traversant respectivement la bride d'entrée au niveau de l'orifice de passage 28 (visible sur la figure 3, sur laquelle un seul des brins du fil chauffant est visible du fait de la coupe). La dimension de l'orifice de passage 28 est supérieur à la dimension des brins du fil chauffant 24 plaqués l'un contre l'autre.

De la sorte, le fil chauffant présente une forme de U avec la base ménagée au niveau de l'embout 30. L'embout 30 peut être muni d'une embase destinée à être insérée, par exemple de force, dans le tube conducteur de chaleur 26, à l'extrémité aval de celui-ci, et cette embase peut comporter un oeillet configuré pour être traversé par le fil chauffant au niveau de sa boucle. On comprend que lors du montage, l'extrémité du fil chauffant est passé dans l'oeillet formant orifice de maintien, et le fil chauffant est replié autour de cet oeillet pour former la boucle.

Un matériau de remplissage, notamment de type résine ou gel, est injecté à l'intérieur du tube conducteur de chaleur, par l'orifice de passage 28, une fois le fil chauffant 24 en place à l'intérieur du tube 26. Ce matériau de remplissage s'étend dans le tube depuis l'embase de l'embout 30 jusqu'à la bride d'entrée, en débordant le cas échéant de l'orifice de passage 28 pour s'étaler sur la face externe de la bride d'entrée. De la sorte, on assure d'une part l'étanchéité entre la bride d'entrée 12, l'orifice de passage 28 par lequel entre et sort le fil chauffant 24, et l'intérieur du tube conducteur de chaleur 26, et on fige d'autre part la position des fils chauffants à l'intérieur du tube conducteur de chaleur afin d'éviter qu'ils ne débattent lors du fonctionnement.

On comprend que le fil chauffant 24, relié électriquement à une alimentation électrique par l'intermédiaire d'un connecteur (non visible), est apte à chauffer le tube conducteur de chaleur 26 composé d'une matière conductrice de chaleur, de préférence du laiton ou de l'aluminium.

Lorsqu'une fonction de nettoyage d'une surface optique est demandée, et que du liquide nettoyage traverse le corps creux d'acheminement 5 entre la tige 14 et le piston mobile 8, tel que cela a pu être précisé précédemment, il peut être activé automatiquement, sur demande de l'utilisateur, ou encore suite à la détection de conditions météorologiques spécifiques, une opération de chauffage du liquide de nettoyage par l'intermédiaire du dispositif chauffant intégré dans la tige 14.

La tige 14, équipée du dispositif chauffant 22, a ainsi pour fonction, outre sa fonction de guidage du piston mobile et sa fonction de pilotage de la quantité de liquide de nettoyage passant vers l'élément de distribution, une fonction de chauffage, par conduction, du fluide qui pénètre dans le dispositif de nettoyage 3 par un embout d'admission 10 de la bride d'entrée 12 et qui s'écoule le long de la paroi extérieure de tige 14.

Dans le mode de réalisation illustré, le tube conducteur de chaleur 26 a pour fonction de répartir de façon homogène la chaleur à transmettre au passage du fluide, et elle permet de maintenir l'organe chauffant en position, le cas échéant avec l'aide de l'embout 30 et du matériau de remplissage.

On va maintenant décrire plus en détails l'élément de distribution qui comporte une rampe de distribution 4 spécifique en ce qu'elle comporte un dispositif chauffant 60 intégré au moins en partie dans la rampe et indépendant d'élément(s) chauffant(s) pouvant être présent(s) dans la tige 14 tel que cela a été décrit précédemment.

Les figures 4a, 4b et 4c illustrent la rampe de distribution 4 du dispositif de nettoyage 3 selon un premier mode de réalisation de l'invention.

La rampe de distribution 4 s'étend transversalement de part et d'autre de l'axe d'allongement X du piston mobile et du corps creux d'acheminement 5 dans l'exemple illustré. Plus précisément, la rampe de distribution 4 comporte, à l'opposé de sa portion d'extrémité 45 par laquelle elle se rattache au corps creux d'acheminement 5, une portion de distribution 62 qui s'étend, selon une direction transversale Y sensiblement perpendiculaire à l'axe d'allongement X, de part et d'autre de l'extrémité aval du corps d'acheminement 5 et dudit axe d'allongement X. Dans l'exemple illustré, la portion de distribution 62 s'étend transversalement sensiblement symétriquement de part et d'autre de l'extrémité aval du corps d'acheminement de sorte que la rampe peut être considérée comme présentant une symétrie transversale par rapport à l'axe d'allongement X. La portion de distribution 62 est formée d'une embase 64 formant une première partie prolongeant la rampe de distribution 4 et apte à être assemblée, de préférence par soudage, à une seconde partie formant couvercle 66 de manière à définir entre ces deux parties le canal de distribution de fluide 56 comportant en partie basse une pluralité d'orifices de distribution 68 de fluide pour l'éjection de celui-ci vers la surface optique à nettoyer lorsque l'élément de distribution 4 est en position déployée.

On comprend de ce qui précède que le canal de distribution de fluide 56 est configuré pour communiquer avec des moyens d'alimentation en fluide de nettoyage/séchage et pour permettre l'éjection de ce fluide via les orifices de distribution. Les moyens d'alimentation en fluide de nettoyage/séchage peuvent consister en le corps creux d'acheminement tel qu'il a été décrit précédemment, avec le fluide amené à l'intérieur du piston mobile, ou bien consister en des moyens d'amenée de fluide distinct du piston mobile, le cas échéant excentré par rapport à l'axe du piston mobile.

Le dispositif chauffant 60 comporte ici un fil résistif 70, distinct du fil chauffant 24 de l'élément chauffant 22 associé à la tige 14, et relié électriquement à une alimentation électrique par l'intermédiaire d'un connecteur ici non représenté. Le fil résistif est agencé de manière à s'étendre au moins en partie dans le canal de distribution 56 et être en contact direct avec le fluide de nettoyage amené à circuler dans ce canal avec l'éjection via les orifices de distribution. Dans ce qui suit, on décrira le dispositif chauffant sous forme d'un fil résistif, sans que cela soit limitatif de l'invention dès lors que le dispositif chauffant est logé, au moins partiellement, à l'intérieur du canal de distribution.

On comprend que le dispositif chauffant comporte une partie interne 70i à la rampe de distribution 4, et une partie externe 70e à la rampe susceptible d'être reliée au connecteur. En d'autres termes, la partie interne 70i s'étend dans le corps creux, et par exemple dans le canal de distribution, et la partie externe 70e s'étend à l'extérieur de la rampe. Un orifice de passage 72, réalisé ici dans l'embase 64, permet de relier ces deux parties du dispositif chauffant, en permettant le passage du dispositif chauffant à travers l'embase. Le diamètre de l'orifice de passage 72 est supérieur au diamètre externe du dispositif chauffant.

Le dispositif chauffant70 peut notamment présenter, dans sa partie interne 70i, la forme d'une boucle agencée dans le canal de distribution, de sorte que la partie externe est formée par deux extrémités jointives. La boucle formée par cette partie interne 70i peut aussi bien être disposée ponctuellement en sortie de l'orifice de passage, de sorte que le dispositif chauffant génère une zone déterminée en travers du passage du fluide circulant dans le canal de distribution, ou bien elle peut être élargie pour suivre le canal de distribution et générer une zone d'échange thermique continue sur tout le canal de distribution.

Dans le premier mode de réalisation illustré, et tel que cela est notamment visible sur les figures 4a et 4b, le canal de distribution de fluide 56 forme un circuit fermé entre l'alimentation en fluide de nettoyage/séchage et les orifices de distribution 68, et la partie interne du dispositif chauffant est agencée pour s'étendre tout le long de ce circuit fermé. Le circuit fermé de ce canal de distribution de fluide est tel qu'il comporte deux parties principales reliées entre elles à leurs extrémités latérales, c'est-à-dire à distance de l'admission de fluide de nettoyage/séchage, et dont l'une communique avec l'alimentation en fluide de nettoyage/séchage et l'autre comporte les orifices de distribution 68.

Comme illustré sur la figure 4b, la partie interne à la rampe du dispositif chauffant court le long du canal de distribution de fluide 56, en étant maintenue sur la face interne de l'embase 64 de la portion de distribution 62, c'est-à-dire la face de l'embase tournée vers le couvercle 66, par l'intermédiaire d'une pluralité de plots de maintien 74 agencés sur cette face interne de l'embase.

La longueur de la partie interne 70i du dispositif chauffant est définie en fonction de la longueur du canal de distribution de fluide 56, et la longueur de la partie externe du fil résistif est définie de manière à permettre le déplacement du piston mobile 8 du dispositif de nettoyage télescopique 3 dans sa position extrême déployée. En d'autres termes, la forme et la dimension de la partie interne 70i restent fixes au fur et à mesure du déplacement de la rampe de distribution de sa position extrême rétractée à sa position extrême déployée, puisqu'elles ne sont fonction que de la longueur du canal de distribution de fluide 56. Et au moins l'une parmi la forme et la dimension de la partie externe 70e est amenée à évoluer au fur et à mesure du déplacement de la rampe de distribution, la distance entre la rampe et le connecteur électrique auquel est raccordé le dispositif chauffant évoluant lors de ce déplacement. On pourra prévoir de disposer la partie externe du dispositif chauffant à distance du piston mobile 8, afin qu'il n'entrave pas le mouvement du piston et donc le déploiement de la rampe de distribution, et/ou dans un fourreau 71 afin qu'il ne s'emmêle pas lorsque la rampe de distribution passe dans la position rétractée.

Conformément à ce qui a été décrit précédemment pour le fil chauffant 24 et la tige 14, un matériau de remplissage, notamment de type résine ou gel, peut être ajouté dans l'orifice de passage 72 pour assurer l'étanchéité entre la portion de distribution 62, l'orifice de passage 72 et le dispositif chauffant.

On a illustré sur la figure 5 un deuxième mode de réalisation de la rampe de distribution, qui se distingue notamment dans l'agencement de l'embase et du couvercle, ici rapporté sous l'embase, dans un plan sensiblement parallèle à la direction de projection du fluide de nettoyage/séchage par les buses de projection.

Conformément à ce qui a été décrit pour le premier mode de réalisation, un fil résistif 70, formant ici un dispositif chauffant 60, est associé à cette rampe de distribution avec une partie interne ici non représentée et agencée à l'intérieur de cette rampe dans la continuité d'une partie externe 70e. Là encore, un orifice de passage 72 est réalisé dans l'embase pour faciliter le passage du dispositif chauffant à l'intérieur de la rampe et du matériau de remplissage peut être injecté pour boucher cet orifice de passage une fois le dispositif chauffant installé.

On comprend que le dispositif de nettoyage selon un aspect de l'invention comporte au moins un dispositif chauffant ménagé dans la rampe de distribution en bout du corps creux d'acheminement de fluide. On pourra de façon additionnelle prévoir un premier dispositif chauffant additionnel tel qu'il a été décrit au niveau de la tige autour duquel coulisse le piston mobile pour le déploiement télescopique de l'élément distribution, et on pourra, alternativement ou cumulativement à ce premier dispositif chauffant additionnel, prévoir de disposer un deuxième dispositif chauffant additionnel dans un conduit d'acheminement de fluide de nettoyage et/ou de séchage disposé en amont du dispositif de nettoyage chauffant selon l'invention pour son alimentation en fluide, le deuxième dispositif chauffant additionnel prenant la forme d'un fil résistif relié à un connecteur et agencé dans ou sur le pourtour du conduit d'acheminement. Il est dès lors possible de piloter la mise en oeuvre de l'un et/ou l'autre des dispositifs chauffants pour s'adapter aux conditions météorologiques, sans avoir besoin de surdimensionner chacun de ces dispositifs chauffants. L'alimentation électrique nécessaire est ainsi quantifiée au plus juste, en mettant en oeuvre chacun des dispositifs chauffants dans les conditions de grand froid, et seulement le dispositif chauffant ménagé dans la rampe de distribution lorsque les températures sont moins extrêmes.

La description qui précède explique clairement comment l'invention permet d'atteindre les objectifs qu'elle s'est fixée et notamment de proposer un dispositif de nettoyage télescopique compact et apte à améliorer le pouvoir nettoyant d'un fluide de nettoyage et/ou de séchage projeté sur une surface optique d'une capteur optique grâce à l'agencement d'au moins un dispositif chauffant, facile à mettre en oeuvre et à installer, dans ledit dispositif de nettoyage.

L'invention ne saurait se limiter aux modes de réalisation spécifiquement donnés dans ce document à titre d'exemples non limitatifs, et s'étend en particulier à tous moyens équivalents et à toute combinaison techniquement opérante de ces moyens, tels que définis par les revendications.

## Revendications

1. Dispositif de nettoyage télescopique (3) destiné à projeter au moins un fluide de nettoyage et/ou de séchage vers une surface vitrée à nettoyer d'un véhicule automobile (1), telle qu'une surface optique (2') d'un capteur optique (2) d'un système de détection optique, comprenant au moins un élément de distribution de fluide, rendu mobile, le long d'un axe d'allongement (X) et en bout d'un piston mobile (8) entre une première position rétractée et une deuxième position déployée de nettoyage et/ou de séchage,
P dans lequel
l'élément de distribution de fluide comporte une rampe de distribution (4) à l'intérieur duquel s'étend un canal de distribution de fluide (56), la rampe de distribution est équipée d'un dispositif chauffant (60) intégré au moins en partie dans la rampe de distribution pour chauffer le fluide passant dans ledit canal de distribution **caractérisé en ce que** la rampe de distribution (4) s'étend transversalement de part et d'autre de l'axe d'allongement (X) le long duquel coulisse le piston mobile (8).

2. Dispositif de nettoyage télescopique (3) selon la revendication 1, **caractérisé en ce que** le dispositif chauffant comporte un fil résistif (70).

3. Dispositif de nettoyage télescopique (3) selon la revendication 1 ou 2, **caractérisé en ce que** le dispositif chauffant (60) est agencé de manière à s'étendre au moins en partie dans le canal de distribution (56).

4. Dispositif de nettoyage télescopique (3) selon l'une des revendications précédentes, **caractérisé en ce que** le dispositif chauffant (60) présente une partie interne (70i) logée dans le corps creux défini par la rampe de distribution (4) et une partie externe (70e) qui s'étend à l'extérieur de la rampe de distribution, le dispositif chauffant (60) étant configuré pour traverser un orifice de passage (72) ménagé dans une paroi de la rampe de distribution.

5. Dispositif de nettoyage télescopique (3) selon la revendication précédente, **caractérisé en ce que** la longueur de la partie interne du dispositif chauffant (60) est fonction de la longueur du canal de distribution de fluide (56) et la longueur de la partie externe dispositif chauffant (60) fonction de la course de déplacement de la rampe de distribution (4) entre la position extrême rétractée et la position extrême déployée.

6. Dispositif de nettoyage télescopique (3) selon la revendication 4 ou 5, **caractérisé en ce que** la partie externe du dispositif chauffant (60) s'étend à distance du piston mobile (8).

7. Dispositif de nettoyage télescopique (3) selon l'une des revendications 4 à 6, **caractérisé en ce que** la partie externe du dispositif chauffant (60) est ménagée dans un fourreau (71).

8. Dispositif de nettoyage télescopique (3) selon l'une des revendications 3 à 7, **caractérisé en ce que** le dispositif chauffant (60) s'étend le long du canal de distribution de fluide (56), en étant maintenu par l'intermédiaire d'une pluralité de plots de maintien (74).

9. Dispositif de nettoyage télescopique (3) selon l'une des revendications précédentes, **caractérisé en ce que** la rampe de distribution (4) s'étend sensiblement symétriquement de part et d'autre de l'axe d'allongement (X) le long duquel coulisse le piston mobile (8).

10. Dispositif de nettoyage télescopique (3) selon l'une des revendications précédentes, **caractérisé en ce que** le canal de distribution (56) communique avec des moyens d'alimentation en fluide de nettoyage/séchage et comporte une pluralité d'orifices de distribution (68) de ce fluide pour l'éjection de celui-ci vers la surface optique (2') à nettoyer.

11. Dispositif de nettoyage télescopique (3) selon l'une des revendications précédentes, **caractérisé en ce que** la rampe de distribution (4) comporte une embase (64) formant une première partie prolongeant le piston mobile (8) et un couvercle (66) venant recouvrir l'embase de manière à définir le canal de distribution de fluide (56).

12. Dispositif de nettoyage télescopique (3) selon la revendication précédente, en combinaison avec la revendication 8, **caractérisé en ce que** le dispositif chauffant (60) (70) est plaqué contre une face interne de l'embase (64) par l'intermédiaire de ces plots de maintien (74).

13. Dispositif de nettoyage télescopique (3) selon l'une des revendications précédentes, **caractérisé en ce que** le piston mobile (8) est configuré pour coulisser à l'intérieur d'un corps creux d'acheminement (5) du liquide de nettoyage et/ou de séchage, le piston mobile (8) étant configurée pour être traversé par le liquide de nettoyage et/ou de séchage au moins dans la position extrême déployée de la rampe de distribution (4).

14. Dispositif de nettoyage télescopique (3) selon la revendication précédente, **caractérisé en ce que** le corps creux d'acheminement (5) comporte un élément chauffant (22) distinct du dispositif chauffant (60) intégré au moins en partie dans la rampe de distribution (4).

15. Système de détection optique destiné à équiper un véhicule automobile, ledit système comportant au moins un capteur optique (2) muni d'une surface optique (2'), **caractérisé en ce qu'**il comporte un dispositif de nettoyage télescopique (3) de la surface optique (2') selon l'une des revendications 1 à 14.

## Patentansprüche

1. Teleskopreinigungsvorrichtung (3), die dazu bestimmt ist, mindestens ein Reinigungs- und/oder Trocknungsfluid auf eine zu reinigende Glasoberfläche eines Kraftfahrzeugs (1), wie eine optische Oberfläche (2') eines optischen Sensors (2) eines optischen Erfassungssystems, zu spritzen, umfassend mindestens ein Fluidverteilungselement, das entlang einer Verlängerungsachse (X) und am Ende eines beweglichen Kolbens (8) zwischen einer ersten eingezogenen Position und einer zweiten ausgefahrenen Reinigungs- und/oder Trocknungsposition beweglich gemacht ist,
wobei das Fluidverteilungselement eine Verteilerrampe (4) enthält, in deren Innerem sich ein Fluidverteilerkanal (56) erstreckt, wobei die Verteilerrampe
mit einer Heizvorrichtung (60) ausgestattet ist, die mindestens teilweise in die Verteilerrampe integriert ist, um das durch den Verteilerkanal fließende Fluid zu erwärmen, **dadurch gekennzeichnet, dass** sich die Verteilerrampe (4) quer zu beiden Seiten der Verlängerungsachse (X) erstreckt, entlang derer der bewegliche Kolben (8) gleitet.

2. Teleskopreinigungsvorrichtung (3) nach Anspruch 1, **dadurch gekennzeichnet, dass** die Heizvorrichtung einen Widerstandsdraht (70) enthält.

3. Teleskopreinigungsvorrichtung (3) nach Anspruch 1 oder 2, **dadurch gekennzeichnet, dass** die Heizvorrichtung (60) so angeordnet ist, dass sie sich mindestens teilweise in den Verteilerkanal (56) erstreckt.

4. Teleskopreinigungsvorrichtung (3) nach einem der vorhergehenden Ansprüche, **dadurch gekennzeichnet, dass** die Heizvorrichtung (60) einen inneren Teil (70i), der in dem durch die Verteilerrampe (4) definierten Hohlkörper untergebracht ist, und einen äußeren Teil (70e) aufweist, der sich außerhalb der Verteilerrampe erstreckt, wobei die Heizvorrichtung(60) so ausgestaltet ist, dass sie eine in einer Wand der Verteilerrampe ausgeführte Durchgangsöffnung (72) durchquert.

5. Teleskopreinigungsvorrichtung (3) nach dem vorhergehenden Anspruch, **dadurch gekennzeichnet, dass** die Länge des inneren Teils der Heizvorrichtung (60) von der Länge des Fluidverteilerkanals (56) abhängt und die Länge des äußeren Teils der Heizvorrichtung (60) und von dem Bewegungshub der Verteilerrampe (4) zwischen der eingezogenen Endposition und der ausgefahrenen Endposition abhängt.

6. Teleskopreinigungsvorrichtung (3) nach Anspruch 4 oder 5, **dadurch gekennzeichnet, dass** sich der äußere Teil der Heizvorrichtung (60) in einem Abstand von dem beweglichen Kolben (8) erstreckt.

7. Teleskopreinigungsvorrichtung (3) nach einem der Ansprüche 4 bis 6, **dadurch gekennzeichnet, dass** der äußere Teil der Heizvorrichtung (60) in einer Hülse (71) eingerichtet ist.

8. Teleskopreinigungsvorrichtung (3) nach einem der Ansprüche 3 bis 7, **dadurch gekennzeichnet, dass** sich die Heizvorrichtung (60) entlang des Fluidverteilerkanals (56) erstreckt und dabei über eine Vielzahl von Haltenoppen (74) gehalten wird.

9. Teleskopreinigungsvorrichtung (3) nach einem der vorhergehenden Ansprüche, **dadurch gekennzeichnet, dass** sich die Verteilerrampe (4) im Wesentlichen symmetrisch zu beiden Seiten der Verlängerungsachse (X) erstreckt, entlang derer der bewegliche Kolben (8) gleitet.

10. Teleskopreinigungsvorrichtung (3) nach einem der vorhergehenden Ansprüche, **dadurch gekennzeichnet, dass** der Verteilerkanal (56) mit Mitteln zur Versorgung mit Reinigungs-/Trockenfluid in Verbindung steht und eine Vielzahl von Öffnungen (68) zur Verteilung dieses Fluids für dessen Ausstoß in Richtung der zu reinigenden optischen Oberfläche (2') enthält.

11. Teleskopreinigungsvorrichtung (3) nach einem der vorhergehenden Ansprüche, **dadurch gekennzeichnet, dass** die Verteilerrampe (4) einen Sockel (64), der einen ersten Teil bildet, der den beweglichen Kolben (8) verlängert, und einen Deckel (66) enthält, der den Sockel abdeckt, um den Fluidverteilerkanal (56) zu definieren.

12. Teleskopreinigungsvorrichtung (3) nach dem vorhergehenden Anspruch in Kombination mit Anspruch 8, **dadurch gekennzeichnet, dass** die Heizvorrichtung (60) (70) über diese Haltenoppen (74) gegen eine Innenseite des Sockels (64) gedrückt wird.

13. Teleskopreinigungsvorrichtung (3) nach einem der vorhergehenden Ansprüche, **dadurch gekennzeichnet, dass** der bewegliche Kolben (8) so ausgestaltet ist, dass er innerhalb eines Hohlkörpers (5) für den Weitertransport der Reinigungs- und/oder Trocknungsflüssigkeit gleitet, wobei der bewegliche Kolben (8) so ausgestaltet ist, dass er mindestens in der ausgefahrenen Endposition der Verteilerrampe (4) von der Reinigungs- und/oder Trocknungsflüssigkeit durchströmt wird.

14. Teleskopreinigungsvorrichtung (3) nach dem vorhergehenden Anspruch, **dadurch gekennzeichnet, dass** der Weitertransport-Hohlkörper (5) ein Heizelement (22) enthält, das sich von der Heizvorrichtung (60) unterscheidet, die mindestens teilweise in die Verteilerrampe (4) integriert ist.

15. Optisches Erfassungssystem zur Ausstattung eines Kraftfahrzeugs, wobei das System mindestens einen mit einer optischen Oberfläche (2') ausgerüsteten optischen Sensor (2) enthält,
**dadurch gekennzeichnet, dass** es eine Teleskopreinigungsvorrichtung (3) der optischen Oberfläche (2') nach einem der Ansprüche 1 bis 14 enthält.

## Claims

1. Telescopic cleaning device (3) intended to spray at least one cleaning and/or drying fluid towards a glass surface to be cleaned of a motor vehicle (1), such as an optical surface (2') of an optical sensor (2) of an optical detection system, comprising at least one fluid distribution element, which is rendered movable, along an axis of elongation (X) and at the end of a movable piston (8) between a retracted first position and a deployed second position for cleaning and/or drying,
wherein the fluid distribution element has a distribution bar (4) inside which a fluid distribution channel (56) extends,
the distribution bar is equipped with a heating device (60) integrated at least in part into the distribution bar so as to heat the fluid passing through said distribution channel, **characterized in that** the distribution bar (4) extends transversely on either side of the axis of elongation (X) along which the movable piston (8) slides.

2. Telescopic cleaning device (3) according to Claim 1, **characterized in that** the heating device has a resistive wire (70).

3. Telescopic cleaning device (3) according to Claim 1 or 2, **characterized in that** the heating device (60) is arranged so as to extend at least in part in the distribution channel (56).

4. Telescopic cleaning device (3) according to one of the preceding claims, **characterized in that** the heating device (60) has an internal part (70i) housed in the hollow body defined by the distribution bar (4) and an external part (70e) that extends outside the distribution bar, the heating device (60) being configured to traverse a passage opening (72) provided in a wall of the distribution bar.

5. Telescopic cleaning device (3) according to the preceding claim, **characterized in that** the length of the internal part of the heating device (60) is a function of the length of the fluid distribution channel (56) and the length of the external part of the heating device (60) is a function of the path of movement of the distribution bar (4) between the retracted extreme position and the deployed extreme position.

6. Telescopic cleaning device (3) according to Claim 4 or 5, **characterized in that** the external part of the heating device (60) extends at a distance from the movable piston (8).

7. Telescopic cleaning device (3) according to one of Claims 4 to 6, **characterized in that** the external part of the heating device (60) is arranged in a sheath (71).

8. Telescopic cleaning device (3) according to one of Claims 3 to 7, **characterized in that** the heating device (60) extends along the fluid distribution channel (56), being held via a plurality of holding pads (74).

9. Telescopic cleaning device (3) according to one of the preceding claims, **characterized in that** the distribution bar (4) extends substantially symmetrically on either side of the axis of elongation (X) along which the movable piston (8) slides.

10. Telescopic cleaning device (3) according to one of the preceding claims, **characterized in that** the distribution channel (56) communicates with cleaning/drying fluid supply means and has a plurality of distribution openings (68) for this fluid, for the ejection thereof towards the optical surface (2') to be cleaned.

11. Telescopic cleaning device (3) according to one of the preceding claims, **characterized in that** the distribution bar (4) has a base (64) that forms a first part that extends the movable piston (8) and a cover (66) that covers the base so as to define the fluid distribution channel (56).

12. Telescopic cleaning device (3) according to the preceding claim, in combination with Claim 8, **characterized in that** the heating device (60) (70) is pressed against an internal face of the base (64) via these holding pads (74).

13. Telescopic cleaning device (3) according to one of the preceding claims, **characterized in that** the movable piston (8) is configured to slide inside a hollow conveying body (5) for the cleaning and/or drying liquid, the movable piston (8) being configured to be traversed by the cleaning and/or drying liquid at least in the deployed extreme position of the distribution bar (4).

14. Telescopic cleaning device (3) according to the preceding claim, **characterized in that** the hollow conveying body (5) has a heating element (22) that is separate from the heating device (60) integrated at least in part into the distribution bar (4).

15. Optical detection system intended to be fitted in a motor vehicle, said system having at least one optical sensor (2) provided with an optical surface (2'), **characterized in that** it has a telescopic cleaning device (3) for the optical surface (2') according to one of Claims 1 to 14.
